(19) **Europäisches Patentamt / European Patent Office / Office européen des brevets**

(11) **EP 2 415 199 B1**

(12) **FASCICULE DE BREVET EUROPEEN**

(45) Date de publication et mention de la délivrance du brevet:
**18.10.2017 Bulletin 2017/42**

(21) Numéro de dépôt: **10716585.4**

(22) Date de dépôt: **26.03.2010**

(51) Int Cl.:
**H04L 9/30** *(2006.01)*    **H04L 9/00** *(2006.01)*

(86) Numéro de dépôt international:
**PCT/FR2010/050561**

(87) Numéro de publication internationale:
**WO 2010/112739 (07.10.2010 Gazette 2010/40)**

(54) **PROCEDE POUR EFFECTUER UNE TACHE CRYPTOGRAPHIQUE DANS UN COMPOSANT ELECTRONIQUE**

VERFAHREN ZUR DURCHFÜHRUNG EINER KRYPTOGRAPHISCHEN AUFGABE IN EINEM ELEKTRONISCHEN BAUELEMENT

METHOD FOR PERFORMING A CRYPTOGRAPHIC TASK IN AN ELECTRONIC COMPONENT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0952054**

(43) Date de publication de la demande:
**08.02.2012 Bulletin 2012/06**

(73) Titulaire: **Koninklijke Philips N.V.**
**5656 AE Eindhoven (NL)**

(72) Inventeurs:
• **BILLET, Olivier**
  **F-06140 Tourrettes Sur Loup (FR)**
• **GILBERT, Henri**
  **F-91440 Bures Sur Yvette (FR)**
• **MACARIO-RAT, Gilles**
  **F-92170 Vanves (FR)**

(74) Mandataire: **de Haan, Poul Erik et al**
**Philips International B.V.**
**Philips Intellectual Property & Standards**
**High Tech Campus 5**
**5656 AE Eindhoven (NL)**

(56) Documents cités:
• **JINTAI DING ED - FENG BAO ET AL: "A New Variant of the Matsumoto-Imai Cryptosystem through Perturbation" 26 février 2004 (2004-02-26), PUBLIC KEY CRYPTOGRAPHY Â PKC 2004; [LECTURE NOTES IN COMPUTER SCIENCE;;LNCS], SPRINGER-VERLAG, BERLIN/HEIDELBERG, PAGE(S) 305 - 318 , XP019002844 ISBN: 9783540210184 pages 308-311**
• **ALINE GOUGET ET AL: "Probabilistic Multivariate Cryptography" 1 janvier 2007 (2007-01-01), PROGRESS IN CRYPTOLOGY - VIETCRYPT 2006 LECTURE NOTES IN COMPUTER SCIENCE;;LNCS, SPRINGER, BERLIN, DE, PAGE(S) 1 - 18 , XP019053247 ISBN: 9783540687993 pages 8,9,15**
• **RIEK J R: "Observations on the application of error correcting codes to public key encryption" 19901010; 19901010 - 19901012, 10 octobre 1990 (1990-10-10), pages 15-18, XP010079308**
• **"Chapter 8: Public-Key Encryption ED - MENEZES A; OORSCHOT VAN P; VANSTONE S" [Online] 1 octobre 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 283 - 319 , XP001525008 ISBN: 9780849385230 Extrait de l'Internet: URL:http://www.cacr.math.uwaterloo.ca/hac/ > pages 298-299**

**(Cont. page suivante)**

- KOBARA K ET AL: "SEMANTICALLY SECURE MCELIECE PUBLIC-KEY CRYPTOSYSTEM", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E85-A, no. 1, 1 January 2002 (2002-01-01), pages 74-83, XP001117318, ISSN: 0916-8508

- Eiichiro Fujisaki ET AL: "How to Enhance the Security of Public-Key Encryption at Minimum Cost" In: "Public Key Cryptography", 29 October 1999 (1999-10-29), Springer Berlin Heidelberg, Berlin, Heidelberg, XP055082059, ISBN: 978-3-54-065644-9 vol. 1560, pages 53-68, DOI: 10.1007/3-540-49162-7_5,

**Description**

Le domaine de l'invention est celui de la cryptographie. La cryptographie trouve application pour sécuriser des transactions entre deux ou plusieurs entités, par application d'une tâche cryptographique. Parmi ces tâches cryptographiques, on trouve le chiffrement de messages, la signature électronique ou encore l'authentification de messages. Un procédé de chiffrement consiste essentiellement à chiffrer un message de façon à ce que seul le destinataire puisse le déchiffrer. Un procédé de vérification de signature électronique consiste essentiellement à vérifier qu'un message est tel qu'il a été signé par une entité qui l'a généré. Un procédé d'authentification de message consiste essentiellement à vérifier qu'un message reçu a été effectivement émis par une entité émettrice d'identité connue.

Plus précisément, le domaine de l'invention est celui de la cryptographie asymétrique, dite à clé publique. La cryptographie à clé publique est particulièrement utile, par exemple pour le paiement électronique, par carte bancaire ou par porte-monnaie électronique. Dans le cas du paiement de proximité, le terminal de paiement doit d'une part se trouver dans un lieu public, ce qui incite à utiliser des procédés de cryptographie à clé publique, pour éviter d'y stocker des secrets. D'autre part, le terminal de paiement doit être bon marché, ce qui incite à utiliser des processeurs aux capacités de calcul limitées. Dans le cas du paiement en ligne, le serveur du marchand ou le serveur de paiement (ou encore le serveur d'intermédiation) est susceptible à certains moments d'être amené à effectuer un grand nombre de vérifications de manière simultanée. Dans les deux cas, il est souhaitable de trouver une solution permettant d'alléger la tâche de vérification, c'est-à-dire la tâche cryptographique qui utilise la clé publique.

On connaît par exemple des procédés cryptographiques de chiffrement dans lesquels une première entité commence par chiffrer un message au moyen d'une clé publique. Seule une deuxième entité, qui détient la clé privée associée à cette clé publique, peut alors déchiffrer le message. Parmi des procédés connus utilisés pour ce genre de tâche cryptographique, on peut citer ceux basés sur l'algorithme RSA (Rivest, Shamir, Adleman) ou sur le problème dit du logarithme discret, faisant intervenir des courbes elliptiques.

La résistance de tels algorithmes est basée sur la longueur de la clé secrète employée. Actuellement, pour un algorithme RSA, il est usuel d'utiliser des clés secrètes allant jusqu'à 2048 bits. Ceci implique que ces algorithmes sont plutôt lents à appliquer en pratique. De plus, la courbe de complexité de tels algorithmes en fonction de la clé secrète est sous-exponentielle, ce qui peut se révéler limitatif dans l'avenir, et permettre à des attaquants de casser de tels algorithmes avec l'évolution des technologies et de vitesses de calcul. Le document KOBARA K ET AL: "SEMANTICALLY SECURE MCELIECE PUBLIC-KEY CRYPTOSYSTEM",IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E85-A, no. 1, 1 janvier 2002, pages 74-83, divulgue un système de chiffrement à clé publique qui est basé sur un système McEliece.

Enfin, les environnements contraints comme la technologie RFID par exemple, n'offrent qu'une surface d'implémentation limitée et ont des contraintes énergétiques limitant leur capacité de stockage et d'exécution. Il est commun d'avoir des puces présentant un millier de portes logiques. Or, ne serait-ce que pour stocker un nombre RSA, il est nécessaire de disposer de plusieurs dizaines de milliers de portes logiques.

Un premier objet de l'invention est de proposer un procédé cryptographique permettant de résoudre les inconvénients ci-avant. L'invention est définie par les revendications jointes ci-après.

D'autres détails et avantages de l'invention seront mieux compris à partir d'exemples de mise en oeuvre dont la description suit en référence aux dessins annexés dans lesquels :

la figure 1 illustre la fonction de chiffrement utilisée pour effectuer une tâche cryptographique selon la présente invention ;
les figures 2A, 2B illustrent un procédé de déchiffrement selon un premier mode de réalisation de l'invention ;
les figures 3A-3C illustrent un procédé de déchiffrement selon un deuxième mode de réalisation de l'invention ;
les figures 4A, 4B illustrent un procédé de déchiffrement selon un troisième mode de réalisation de l'invention ;
la figure 5A illustre un système de transmission cryptographique asymétrique utilisant la fonction de chiffrement selon la présente invention comme clé publique ; et
la figure 5B illustre un procédé de transmission chiffrée selon la présente invention.

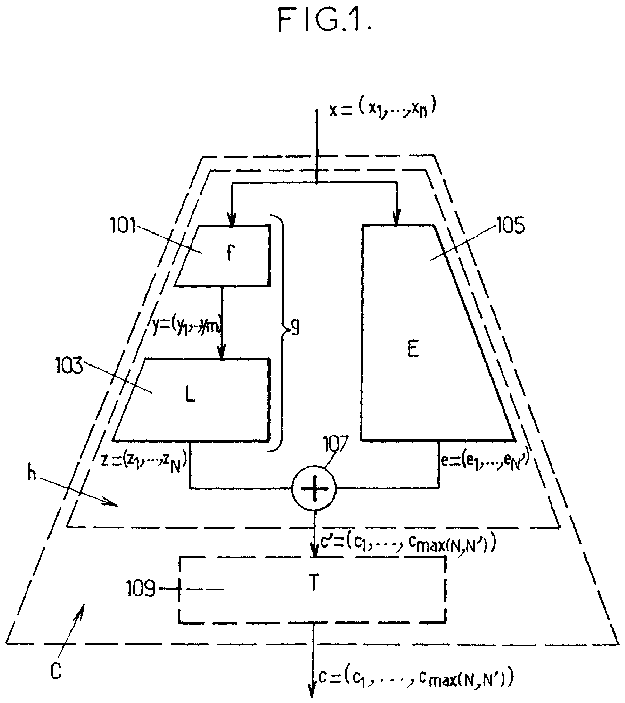

La **figure 1** illustre une fonction de chiffrement pouvant servir de clé publique dans un premier mode de réalisation d'un procédé pour effectuer une tâche cryptographique selon la présente invention, dans lequel la tâche consiste à chiffrer une donnée x.

La figure 1 décrit plus particulièrement la fonction de chiffrement C utilisée pour permettre le chiffrement de cette donnée x, qui peut être une donnée numérique vectorielle comprenant un nombre n de composantes $x_1,...x_n$, où $n \geq 1$. Les composantes $x_i$ sont choisies dans un corps fini K, de sorte que x appartienne à $K^n$. Un tel corps peut consister en un corps de Galois, par exemple un corps de Galois de cardinal deux GF(2), ne comprenant que les deux éléments « 0 » et « 1 ».

Cette fonction de chiffrement C se décompose en trois composantes principales et une composante optionnelle. Sa première composante 101 consiste en une fonction f, qui associe à la donnée x une première donnée intermédiaire y. Cette donnée y présente un nombre m de composantes $y_1,...,y_m$, où $m \geq 1$. Si ce nombre m est supérieur au nombre n, on parle alors d'expansion, quantifiée par un paramètre $Exp(f)=m/n$. Un exemple de fonction f consiste en un système de m fonctions polynomiales $f_i$, de degré $d_f$. Ainsi, avec une donnée x présentant n composantes $x_1,...,x_n$ appartenant à un corps K, chacune des m composantes $y_1,...,y_m$ sont calculées grâce à une fonction polynomiale $f_i$ de degré $d_f$. Par exemple, si ce degré $d_f$ vaut deux, c'est-à-dire si le système f est quadratique, il comporte alors un ensemble de fonctions polynomiales $f_i$ quadratiques et les composantes $y_i$ respectent l'équation suivante :

$$(1) \qquad y_i = f_i(x_1,...,x_n) = \sum_{j=1}^{n} \sum_{k=1}^{n} \alpha_{i,j,k} x_j x_k + \sum_{l=1}^{n} \beta_{i,l} x_l + \gamma_i$$

Les coefficients $\alpha_{i,j,k}$, $\beta_{i,l}$ et $\gamma_i$ peuvent être choisis dans le corps K. On parle ici de système multivarié quadratique. Un tel système quadratique est avantageux, par rapport à un système de degré $d_f$ supérieur à deux, car la complexité, donc les ressources de calcul nécessaires, augmente exponentiellement avec le degré $d_f$ du système. Un tel système multivarié quadratique peut provenir d'une clé publique pour un cryptosystème multivarié, par exemple.

La deuxième composante 103 de la fonction de chiffrement C consiste en une fonction de codage L à appliquer à la donnée intermédiaire y issue de la première fonction f. Cette fonction de codage L va associer à la première donnée intermédiaire une deuxième donnée intermédiaire z comprenant un nombre N de composantes $z_1,...,z_N$, où $N \geq 1$, et permet d'ajouter de la redondance à la donnée intermédiaire y afin de la rendre plus résistante au bruit ou autres erreurs qui pourraient s'y additionner. Une telle fonction de codage L peut consister en un système de N fonctions polynomiales $L_i$ de degré $d_L$. Ainsi, avec une donnée y présentant m composantes $y_1,...,y_m$, cette fonction L va faire correspondre à la donnée y une donnée z présentant N composantes $z_1,...,z_N$ calculées chacune grâce à une fonction polynomiale $L_i$ de degré $d_L$. Les composantes $z_i$ respectent alors l'équation suivante, dans le cas purement illustratif d'un degré $d_L$ égal à deux :

$$(2) \qquad z_i = L_i(y_1,...,y_m) = \sum_{j=1}^{m} \sum_{k=1}^{m} a_{i,j,k} y_j y_k + \sum_{l=1}^{n} b_{i,l} y_l + c_i$$

En d'autres termes, la deuxième donnée intermédiaire z est issue de la donnée x à laquelle est appliquée une fonction g, composée de la fonction de codage L avec la première fonction f, selon :

$$(3) \qquad z = L \circ f(x) = g(x)$$

Une fonction de codage L linéaire, c'est-à-dire de degré $d_L$ égal à un, est ici particulièrement avantageuse en terme de complexité. Avec un système f multivarié quadratique, donc de degré deux, composé avec une fonction linéaire L, donc de degré un, la fonction g résultante présente un degré $d_h$ de deux, avantageux en termes de complexité de calcul.

Une telle fonction de codage trouve habituellement son application dans la correction d'erreurs, et la fonction L peut ainsi consister en un code correcteur d'erreurs, comme par exemple un code BCH, un code de Goppa, ou encore un code de Reed-Solomon.

La troisième composante 105 de la fonction de chiffrement C consiste enfin en une deuxième fonction E, appliquée elle aussi à la donnée x à chiffrer. L'idée sous-jacente est d'ajouter des éléments, comme par exemple du bruit ou un aléa que l'on sait maitriser, dans la fonction de chiffrement globale C, qui pourra être utilisée comme une clé publique dans un système de cryptographie asymétrique. Cette deuxième fonction E peut consister, par exemple, en une fonction aléatoire ou en un système de N' fonctions polynomiales $E_i$ de degré $d_E$. Dans ce dernier cas, toujours avec la donnée x présentant n composantes $x_1,...,x_n$, cette fonction E va faire correspondre à la donnée x une donnée e, que l'on peut qualifier « d'erreur », présentant N' composantes $e_1,...,e_{N'}$ calculées chacune grâce à une fonction polynomiale $E_i$ de degré $d_E$. L'expansion de cette fonction E vaut alors $Exp(E)=N'/n$ et les composantes $e_i$ de la donnée d'erreur e respectent alors l'équation suivante, dans le cas non limitatif d'un degré $d_E$ égal à deux :

$$(4) \qquad e_i = E_i(x_1,...,x_n) = \sum_{j=1}^{N'} \sum_{k=1}^{N'} A_{i,j,k} x_j x_k + \sum_{l=1}^{N'} B_{i,l} x_l$$

La fonction composée g et la deuxième fonction E sont alors additionnées pour former une fonction de chiffrement de base h respectant l'équation suivante :

$$(5) \qquad h = L \circ f + E$$

Une telle fonction de chiffrement de base h peut servir de clé publique, auquel cas, lorsque cette clé publique est utilisée pour chiffrer une donnée x, la donnée chiffrée de base c' résultante, comme illustré sur la figure 1, vaut :

$$(6) \qquad c' = \underset{g}{\overset{}{\underbrace{\;\; h \;\;}}}\;(x) = L \circ f(x) + E(x)$$

Le degré $d_g$ de la fonction composée g et le degré $d_E$ de la fonction E ne sont pas forcément identiques. S'ils sont différents, un utilisateur malveillant peut tenter d'utiliser cette différence pour différencier la fonction g de la fonction E, en déduisant par des attaques-tests les degrés de la fonction polynomiale résultante qui appartiennent à l'une ou l'autre de ces fonctions. Afin de rendre cette tâche plus ardue, les degrés dg et $d_E$ sont choisis identiquement, par exemple égaux à deux, dans un mode de réalisation avantageux.

Le même raisonnement s'applique en ce qui concerne l'expansion conférée par les fonctions g et E, caractérisée respectivement par les paramètres Exp(g)=N/n et Exp(E)=N'/n, qui ne sont pas forcément identiques. Si par exemple N' est inférieur à N, c'est-à-dire si la donnée d'erreur e présente moins de composantes que la deuxième donnée intermédiaire z, certaines composantes $c_i$ de la donnée chiffrée de base résultante ne comporteront pas de composantes d'erreur $e_i$, et un utilisateur malveillant pourra déduire cela par des attaques-tests. Il est donc avantageux de choisir des paramètres N et N' de même valeur, afin que la fonction composée g et la fonction E impliquent le même degré d'expansion sur la donnée x.

Dans un mode particulier de réalisation de l'invention, une composante optionnelle 109 consistant en une fonction de dissimulation supplémentaire T est appliquée à la donnée chiffrée de base c' afin d'obtenir une donnée chiffrée avancée c, selon :

$$(7) \qquad c = T(c') = T \circ (L \circ f(x) + E(x))$$

La fonction globale de chiffrement avancée C se compose alors de la façon suivante :

$$(8) \qquad C = T \circ (L \circ f + E)$$

L'utilisation d'une telle fonction de dissimulation supplémentaire T permet de renforcer la résistance du chiffrement à d'éventuelles attaques. En effet, avec la fonction de chiffrement de base h telle que présentée à l'équation (5), la possibilité existe qu'un utilisateur malveillant puisse tenter de distinguer la composante $L \circ f$ (la branche de gauche de la figure 1) de la composante E (la branche de droite de la figure 1), en effectuant par exemple des attaques-tests. Le rajout d'une nouvelle couche de chiffrement, avec la fonction supplémentaire T, permet d'empêcher cette distinction puisque les éléments issus de chacune des branches de la figure 1 seront alors indissociables après application de la fonction de dissimulation T. Cela permet en outre de pouvoir rendre la fonction de codage L publique. Une telle fonction T, quant elle est employée, doit être réversible afin de permettre un déchiffrement avancé par la suite.

La fonction de chiffrement de base h, ou la fonction de chiffrement avancée C, construites de la façon décrite ci-avant, peuvent alors servir de clé publique dans un système de cryptographie asymétrique. Ainsi, toujours en se référant à la figure 1, une clé publique de base h peut être générée grâce à un procédé de génération comprenant une étape de composition de la première fonction f avec une fonction de codage L afin d'obtenir une première fonction intermédiaire g, suivie d'une étape d'addition de la deuxième fonction E à ladite fonction intermédiaire g. Une clé publique avancée C peut aussi être générée, en composant une fonction de dissimulation T avec la clé publique de base h telle que générée ci-avant.

Une telle clé publique peut être mise à disposition d'un destinataire afin que celui-ci effectue une tâche cryptographique au moyen de cette clé publique, sans que celui-ci n'ait connaissance des fonctions individuelles f, L, E (et optionnellement T). La clé secrète associée à cette clé publique consiste alors dans la connaissance des fonctions individuelles f, L, E (et optionnellement T) qui vont servir à déchiffrer des données chiffrées au moyen de la clé publique.

Dans un premier mode de réalisation du procédé de chiffrement, la première fonction f est une fonction inversible, de préférence quadratique, c'est-à-dire consistant en un système de polynômes $f_i$ de degré 2. La deuxième fonction E, quant à elle, peut prendre la forme d'une fonction aléatoire, c'est-à-dire par exemple la forme d'un système de polynômes dont les coefficients prennent des valeurs aléatoirement choisies parmi les éléments du corps K employé pour les variables $x_i$.

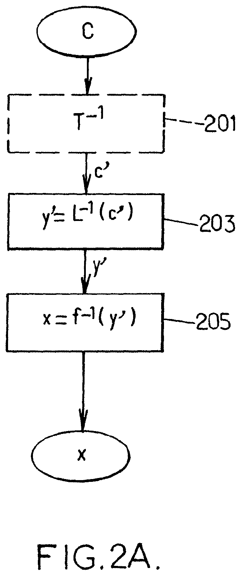

Un procédé de déchiffrement associé à une fonction de chiffrement utilisant les fonctions f, L, E et T selon le premier mode de réalisation est décrit en relation avec la **figure 2A.**

Lors d'une première étape optionnelle 201, dans le cas où une fonction de chiffrement avancée C selon l'équation (8) a été utilisée pour obtenir la donnée chiffrée avancée c, la fonction $T^{-1}$, inverse de la fonction de dissimulation T, est appliquée à la donnée c à déchiffrer, afin d'obtenir un donnée chiffrée de base c', selon l'équation suivante :

$$(9) \qquad c' = T^{-1}(c)$$

Après cette étape optionnelle 201, une fonction de décodage $L^{-1}$, correspondant à la fonction de codage L composant la fonction de chiffrement, est appliquée à la donnée chiffrée de base c', au cours d'une étape 203. Une telle fonction de décodage associe à la donnée c' une donnée intermédiaire y, débarrassée de la composante d'erreur induite par la fonction E. Cette étape 203 est la première étape dans le cas où la donnée à déchiffrer à été simplement chiffrée au moyen de la fonction de chiffrement de base h.

Enfin, lors d'une étape 205 suivante, la fonction $f^{-1}$, inverse de la première fonction f, est appliquée à la donnée intermédiaire y afin d'obtenir une donnée x déchiffrée.

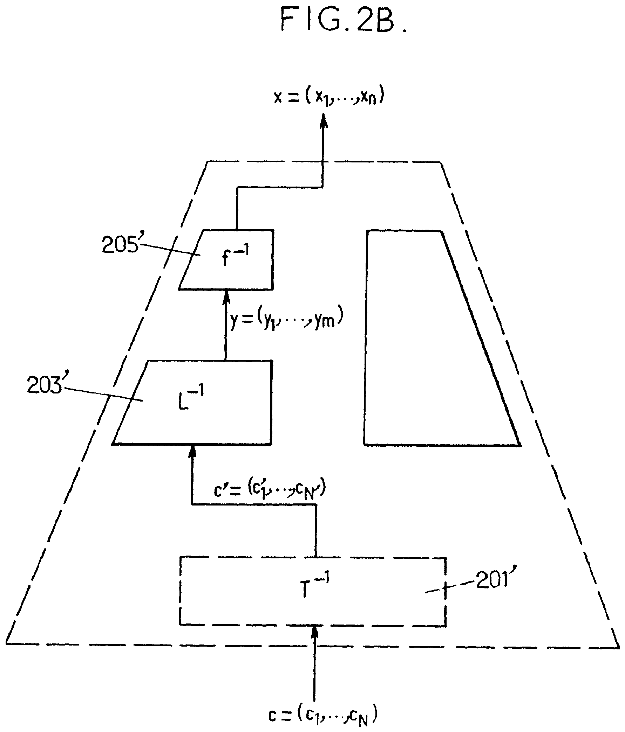

Le principe de ce déchiffrement selon un premier mode de réalisation est illustré d'une autre manière à la **figure 2B**, basée sur la fonction de chiffrement illustrée à la figure 1. Sur cette figure 2B, les indications 201', 203' et 205' correspondent respectivement aux étapes 201, 203 et 205 décrites ci-avant et servent à référencer les étapes du procédé de la figure 2A par rapport aux fonctions appliquées successivement à la donnée à déchiffrer, afin de montrer comment le déchiffrement selon un premier mode de réalisation permet de remonter à la donnée x.

Il est apparent, sur cette figure 2B, que par rapport à la fonction globale de chiffrement illustrée à la figure 1, ce premier mode de réalisation de déchiffrement utilise la branche de gauche de la fonction de chiffrement afin de retrouver la donnée initiale x à partir de la donnée chiffrée de base c ou la donnée chiffrée avancée c. Un tel premier mode de réalisation est assimilable à un décodage traditionnel, avec lequel l'impact de la composante e, pouvant être considérée comme une erreur induite par la fonction E dans la donnée chiffrée, est supprimé grâce à la redondance introduite par la fonction de codage L.

Dans un deuxième mode de réalisation, variante du premier mode, on peut aussi utiliser la branche de droite de la fonction de chiffrement illustrée à la figure 1 pour remonter vers la donnée initiale x à partir de la donnée chiffrée. Dans un tel deuxième mode de réalisation, la fonction f n'est pas forcément réversible et peut être aléatoire, ce qui représente un grand avantage en termes cryptographiques.

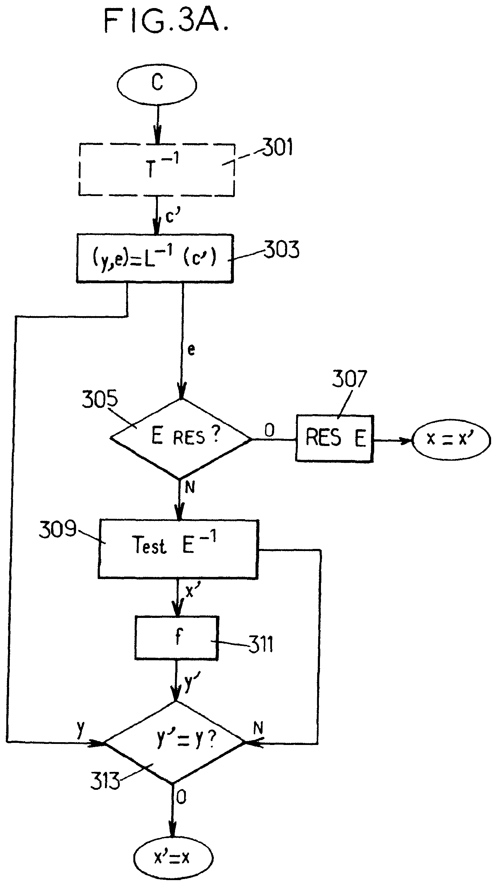

La **figure 3A** illustre le procédé de déchiffrement selon ce deuxième mode de réalisation.

Lors d'une première étape optionnelle 301, dans le cas où une fonction de chiffrement avancée C selon l'équation (8) a été utilisée, la fonction $T^{-1}$, inverse de la fonction de dissimulation T, est appliquée à la donnée chiffrée avancée c à déchiffrer, afin d'obtenir un donnée chiffrée de base c', selon l'équation (9).

Ensuite, lors d'une étape de décodage 303 par application de la fonction de décodage $L^{-1}$ à la donnée c' (qui peut être la première étape dans le cas d'un chiffrement de base), on obtient une première donnée intermédiaire y vérifiant c'=L(y)+e. La connaissance de c', y et L permet alors de déduire une deuxième donnée intermédiaire e vérifiant e=c'-L(y), qui correspond à une composante assimilable à une erreur qui serait induite par la fonction E.

Cette donnée intermédiaire e va être alors utilisée, lors de l'étape 305, pour retrouver une donnée d'origine x'. Pour ce faire, il faut pouvoir inverser la fonction E, ce qui n'est pas immédiat, puisque celle-ci est de nature aléatoire.

Il faut déterminer, lors d'une étape 307, si la fonction E peut être résolue ou non afin de pouvoir l'inverser. La capacité à inverser la fonction E va dépendre en fait de l'expansion de cette fonction.

Comme déjà vu, on appelle communément «expansion d'une fonction f», symbolisée par Exp(f), le rapport i/j entre le nombre i de variables en sortie de cette fonction (pour un système f de polynômes $f_i$, le nombre de polynômes $f_i$ comme définis par exemple à l'équation (1)) et le nombre de variables en entrée de cette fonction (pour une donnée x, le nombre de composantes $x_i$). Il a été précisé ci-avant que Exp(f)=m/n, Exp(L)=N/m et Exp(E)=N'/n.

Si l'on considère ici que la fonction E est un système polynomial quadratique aléatoire de N' fonctions $e_i$ selon l'équation (4), inverser le système E revient à résoudre un système avec un grand nombre de variables.

Cependant, un choix particulier de la fonction E peut permettre de résoudre un tel système. Si la fonction E consiste en une multiplication d'une pluralité de fonctions linéaires entre elles, c'est-à-dire si :

$$(10) \qquad E = \prod_i l_i$$

on peut alors contrôler la probabilité $P(e \neq 0)$ que E fournisse un valeur non nulle.

En se plaçant dans l'exemple non limitatif où E est un système quadratique correspondant à la multiplication de deux fonctions linéaires aléatoires, telles que la probabilité $P(l1)$ et $P(l2)$ de chacune des fonctions de fournir une donnée non nulle soit égale à 1/2, comme par exemple sur GF(2), alors la probabilité d'avoir une donnée e non nulle vaut :

$$(11) \qquad P(e \neq 0) = P(l_1) * P(l_2) = \frac{1}{4}$$

Dans un quart des cas, chacune des fonctions linéaires l1 et l2 vaut un, ce qui fournit deux équations linéaires à résoudre pour chaque composante, soit $2*N'/4$ équations linéaires pour l'ensemble du système. Si ce nombre $2*N'/4$ est supérieur ou égal au nombre n de variables $x_i$, le système peut être résolu avec une bonne probabilité, ce qui équivaut à la condition suivante, pour résoudre le système E :

$$(12) \qquad Exp(E) = \frac{N'}{n} \geq 2$$

Si cette condition est remplie, il est possible de résoudre directement le système d'équation de la fonction E lors d'une étape 309, ce qui permet alors d'inverser la fonction E et d'obtenir la donnée déchiffrée x, par application de la fonction inverse de E à la deuxième donnée intermédiaire e.

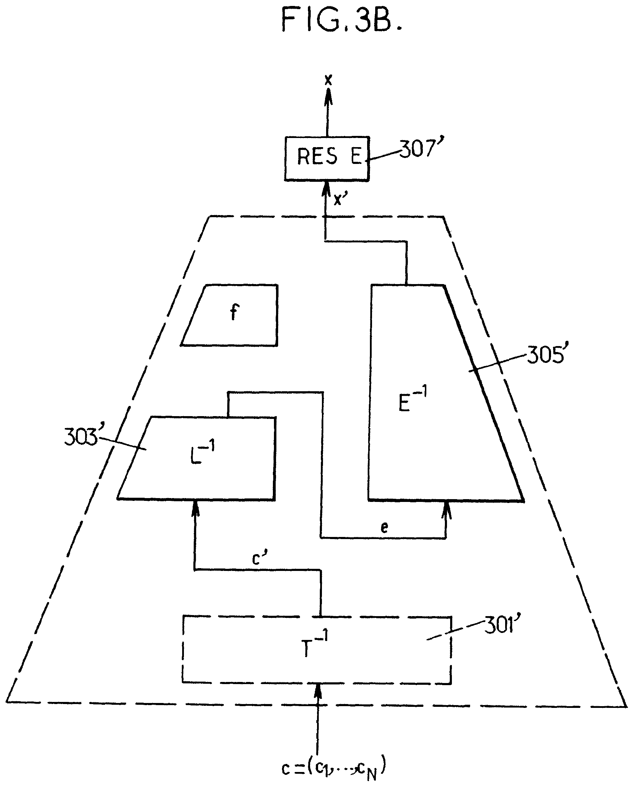

Ce premier cas est illustré d'une autre manière à la **figure 3B,** basée sur la fonction de chiffrement illustrée à la figure 1. Sur cette figure 3B, les indications 301', 303', 305' et 307' correspondent respectivement aux étapes 301, 303, 305 et 307 décrites ci-avant et servent à référencer les étapes du procédé de la figure 3A par rapport aux fonctions appliquées successivement à la donnée à déchiffrer c, afin de montrer comment le déchiffrement selon le deuxième mode de réalisation, dans le cas où le système E peut être résolu, permet de remonter à la donnée x.

Il est apparent, sur cette figure 3B, que par rapport à la fonction globale de chiffrement illustrée à la figure 1, ce premier mode de réalisation de déchiffrement utilise une partie de la branche de gauche et la branche de droite de la fonction de chiffrement afin de retrouver la donnée initiale x à partir de la donnée chiffrée de base c' ou la donnée chiffrée avancée c.

Si, par contre, la condition pour résoudre directement E n'est pas remplie, à cause d'une expansion insuffisante ou du fait que certaines équations linéaires composant E ne sont pas indépendantes, le système E ne pourra pas être complètement résolu et il restera un certain nombre de variables inconnues.

Dans un tel cas, il reste alors la possibilité de faire des tests successifs sur les variables, c'est-à-dire de faire une hypothèse sur ces variables, d'appliquer à la donnée e la fonction inverse à E correspondant à cette hypothèse afin d'obtenir une donnée candidate x', lors d'une étape 309 illustrée à la figure 3A.

A ce stade, on dispose toujours de la donnée intermédiaire y telle que décodée. Il suffit alors, lors d'une étape 311, d'appliquer à la donnée candidate x' la fonction f et de comparer le résultat y' à la donnée intermédiaire y au cours d'une étape de comparaison 313. On vérifie alors l'équation suivante :

$$(13) \qquad y' = f(x') = y$$

Si cette équation est vérifiée, la donnée candidate x' correspond bien à la donnée x initialement chiffrée. Si au contraire cette équation n'est pas vérifiée, la donnée d'origine candidate x' n'est pas la bonne donnée initialement chiffrée, et l'on revient à l'étape 309 où l'on fait une nouvelle hypothèse sur les variables non résolues du système E. On va alors recommencer les étapes 309-313, jusqu'à ce qu'une donnée candidate soit trouvée permettant de vérifier l'équation (13).

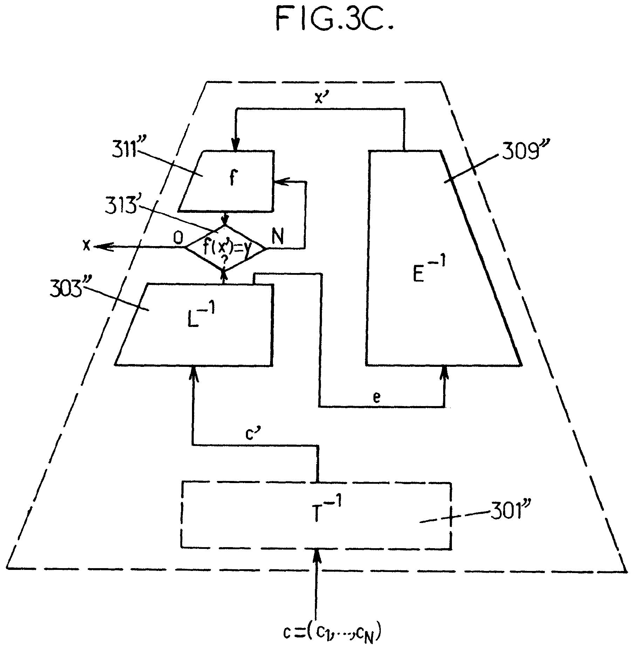

Le principe de ce déchiffrement dans ce cas est illustré d'une autre manière à la **figure 3C,** basée sur la fonction de chiffrement illustrée à la figure 1. Sur cette figure 3C, les indications 301", 303", 309", 311" et 313" correspondent respectivement aux étapes 301, 303, 309, 311 et 313 décrites ci-avant et servent à référencer les étapes du procédé de la figure 3A par rapport aux fonctions appliquées successivement à la donnée à déchiffrer c, afin de montrer comment le déchiffrement selon le deuxième mode de réalisation, dans le cas où le système E ne peut pas être directement résolu, permet de remonter à la donnée x.

Il est apparent, sur cette figure 3C, que par rapport à la fonction globale de chiffrement illustrée à la figure 1, ce mode de déchiffrement utilise la branche de droite et la branche de gauche, en deux temps, de la fonction de chiffrement afin de retrouver la donnée initiale x à partir de la donnée chiffrée de base c' ou la donnée chiffré avancée c.

Dans ces deux premiers modes de réalisation, l'aptitude de la fonction de décodage $L^{-1}$ à retrouver la donnée intermédiaire y avec certitude dépend de la résistance au bruit du code L employé et de l'impact de la composante introduite par la fonction E, considéré comme du bruit dans le cas présent, lors de l'addition 107. Un code correcteur d'erreurs traditionnel, par exemple, présente un taux d'erreurs seuil, lié à une probabilité plus ou moins grande d'avoir un bruit non nul, en dessous duquel on peut garantir que la donnée décodée est bien la donnée qui a été initialement codée.

Plus on est au-dessus de ce seuil, et plus l'incertitude sur la valeur décodée augmente, ce qui se traduit par l'existence de non pas une seule valeur décodée avec certitude, mais d'un nombre de valeurs décodées possibles augmentant en fonction de l'augmentation de la probabilité d'avoir du bruit.

Dans le cas présent, la composante e introduite par la fonction E lors du chiffrement est assimilable au bruit d'un système de transmission, et la probabilité que e soit différent de 0, plus ou moins grande suivant la fonction E, va influencer le décodage par la fonction $L^{-1}$, en particulier le nombre de données décodées y potentielles. Si la probabilité $P(e{\neq}0)$ que la donnée e issue de la fonction E soit différente de 0 est suffisamment faible, c'est-à-dire si le bruit impliqué par la fonction E reste suffisamment faible, le décodage sera efficace et la donnée décodée y sera la bonne valeur. Il existe une valeur seuil P(L,E) de la probabilité $P(e{\neq}0)$, dépendant du type de fonction de codage L et de la fonction E employés, en dessous de laquelle on peut garantir l'unicité de la donnée décodée y.

En d'autres termes, si $P(e{\neq}0) \leq P(L,E)$, le codage L sera injectif et le décodage par la fonction $L^{-1}$ donnera l'unique donnée intermédiaire y, pouvant ensuite permettre de retrouver la donnée x par application de la fonction $f^{-1}$. Dans un tel cas, les premier et deuxième modes de réalisation, tels que décrit ci-avant et aux figures 2A-2B et 3A-3C, permettent d'obtenir la donnée x.

Si, par contre, $P(e{\neq}0) > P(L,E)$, le décodage par la fonction $L^{-1}$ donnera une série de données intermédiaires y(i). Il y aura donc incertitude sur la donnée intermédiaire valide dans cette série, et ce d'autant plus que la série sera importante, ce qui sera d'autant plus le cas que la probabilité de bruit $P(e{\neq}0)$ sera grande.

Dans un tel cas, on peut alors utiliser des procédés de chiffrement et de déchiffrement selon un troisième mode de réalisation. Dans ce troisième mode de réalisation il n'est plus nécessaire que la fonction f soit inversible, par contre la fonction E doit l'être.

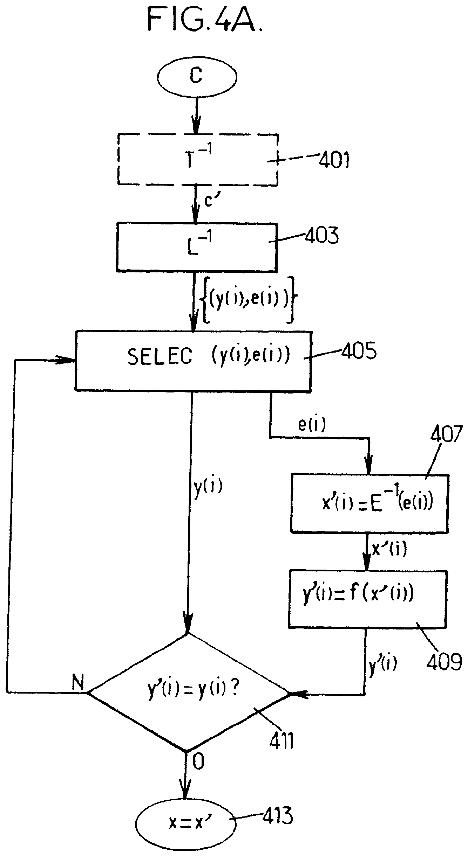

Un procédé de déchiffrement selon ce troisième mode de réalisation est illustré à la **figure 4A**.

Lors d'une première étape optionnelle 401, dans le cas où une fonction de chiffrement avancée C selon l'équation (8) a été utilisée, la fonction $T^{-1}$, inverse de la fonction de dissimulation T, est appliquée à la donnée chiffrée avancée c à déchiffrer, afin d'obtenir un donnée chiffrée de base c', selon l'équation (9).

Lors d'une étape de décodage 403, par application de la fonction de décodage $L^{-1}$ à la donnée c' (qui peut être la première étape dans le cas d'un chiffrement de base), on obtient une liste de premiers éléments candidats y(i) vérifiant c'=L(y(i))+e(i). Une telle étape 403 peut être réalisée grâce à un algorithme approprié, et est caractéristique d'un décodage par liste. Comme pour chaque élément y(i), on peut déduire le deuxième élément correspondant e(i) par e(i)=c'-L(y(i)), on détermine en fait, au cours de cette étape 403, une liste de paires d'éléments {(y(i),e(i))}, liste dont la taille sera fonction de la fonction de codage L employée et de la probabilité $P(e{\neq}0)$ de la fonction E.

Une fois cette liste de paires potentielles d'éléments {(y(i),e(i))} définie, une étape 405 de sélection d'une première paire (y(i),e(i)) dans cette liste a lieu.

Lors d'une étape 407, on calcule une donnée d'origine candidate x'(i) par application de la fonction inverse de la fonction E au deuxième élément e(i) correspondant à y(i), selon l'équation suivante :

$$(14) \qquad x'(i) = E^{-1}(e(i))$$

Puis, lors d'une étape 409, on applique la fonction f à la donnée d'origine candidate x'(i), afin d'obtenir une donnée intermédiaire y'(i) telle que y'(i)= f(x'(i)).

A ce stade du procédé, une donnée d'origine candidate x'(i), son image y'(i) par la fonction f et un première élément candidat y(i) ont été obtenus, correspondant tous à la paire (y(i),e(i)) sélectionnée lors de l'étape 407.

Il faut alors vérifier, lors d'une étape de vérification 411, l'équation suivante :

$$(15) \qquad y'(i) = f(x'(i)) = y(i)$$

Si cette équation (15) est vérifiée, alors la donnée d'origine candidate x'(i) correspond à la donnée initialement chiffré x et le déchiffrement est réussi, comme indiqué à l'étape 413 de la figure 4A.

Si cette équation (15) n'est pas vérifiée, la donnée d'origine candidate x'(i) ne correspond pas à la donnée initialement chiffrée x, et l'on revient à l'étape 405 de sélection où l'on sélectionne la paire suivante (y(i+1),e(i+1)) dans la liste de paires potentielles définies à l'étape 403. On va alors recommencer les étapes 405-411, jusqu'à ce qu'une donnée x'(i) candidate soit trouvée permettant de vérifier l'équation (15).

Avec un tel mode de réalisation, la fonction f ne doit pas être nécessairement inversible, puisque c'est la fonction f elle-même qui est utilisée au cours de l'étape 409, et non son inverse.

Pour obtenir la liste de données intermédiaires candidates au cours de l'étape 403, on peut utiliser un algorithme de décodage de liste associé à la fonction de codage utilisée lors de la composition de la fonction de chiffrement, comme par exemple un algorithme de décodage en liste d'un code Reed-Solomon. Ainsi pour une fonction de codage L donnée, et pour une donnée c', un tel algorithme fournira une liste de données y'(i) ayant une assez bonne probabilité de répondre aux équations précédentes. L'efficacité d'un tel procédé dépend évidemment du niveau de bruit apporté par la fonction d'erreur E. Bien que ce mode de réalisation supporte un taux de bruit supérieur au premier mode de réalisation introduit précédemment, il ne restera efficace qu'en dessous d'un certain seuil de taux de bruit. Cependant, un tel mode de réalisation permet de relâcher les contraintes sur le code L lui-même et d'utiliser par exemple des codes correcteurs d'erreurs dont l'expansion Exp(L) est relativement réduite.

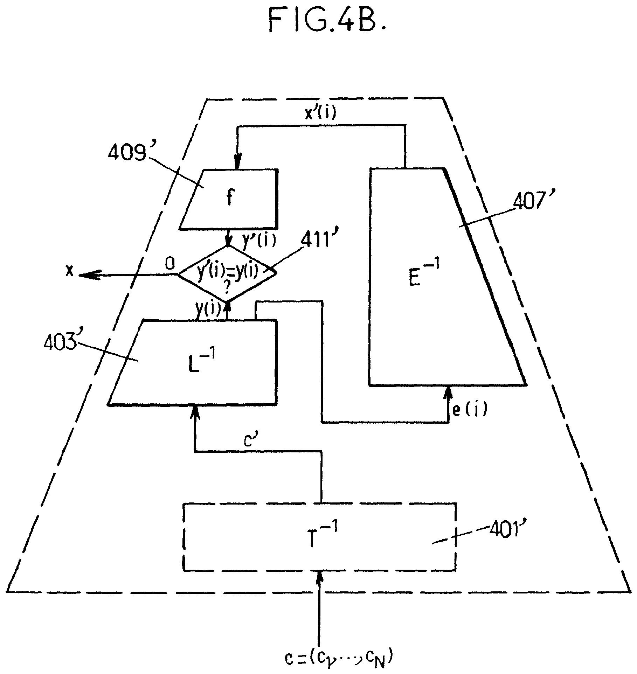

Le principe de ce déchiffrement associé à ce troisième mode de réalisation est illustré d'une autre manière à la **figure 4B**, toujours basée sur la figure 1, par rapport aux fonctions utilisées lors du chiffrement. Sur cette figure 4B, les étapes 401', 403', 407', 409' et 411' correspondent respectivement aux étapes 401, 403, 407, 409 et 411 décrites ci-avant et sont référencées par rapport aux fonctions appliquées successivement à la donnée à déchiffrer.

Il est apparent, sur cette figure 4B, que par rapport à la fonction globale de chiffrement illustrée à la figure 1, ce troisième mode de réalisation du déchiffrement utilise aussi bien la branche de gauche, en deux temps, que celle de droite pour retrouver la donnée initiale x à partir de la donnée chiffrée de base c' ou la donnée chiffrée avancée c.

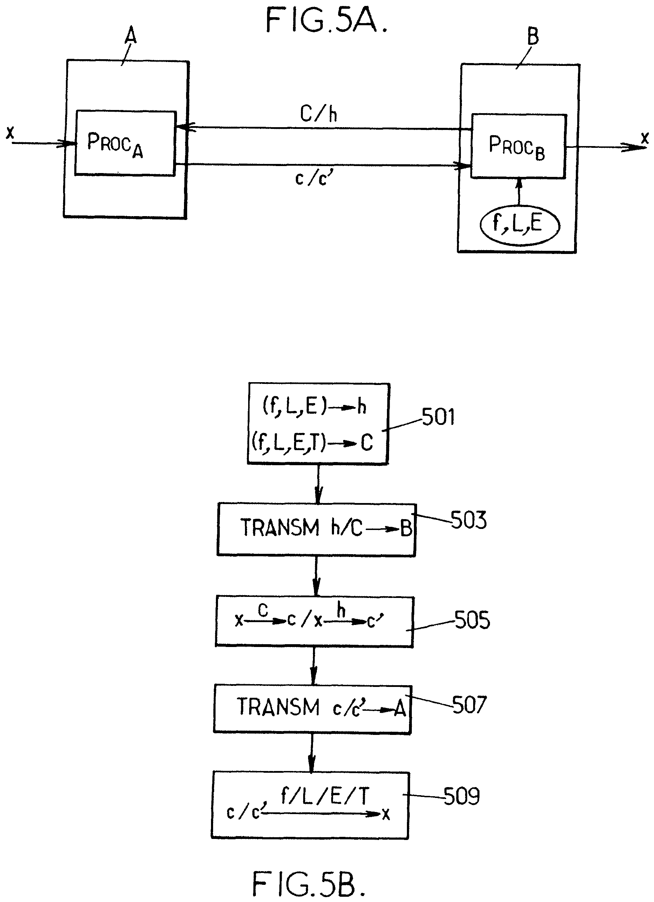

La **figure 5A** illustre un système de transmission cryptographique asymétrique utilisant la fonction de chiffrement selon la présente invention.

Un tel système comprend une première entité A, communément appelée « vérificateur », laquelle communique avec une deuxième entité B, communément appelée « prouveur ».

La deuxième entité B comporte un module de calcul $PROC_B$ capable de générer une fonction publique de base h ou une fonction publique avancée C, telles que décrites ci-avant et sur la figure 1. De telles fonctions publiques peuvent servir de clé publique dans un système de cryptographie asymétrique ; la clé publique peut être mise à disposition de la première entité A, afin que celle-ci l'utilise pour chiffrer une donnée x à transmettre à la deuxième entité B. Par exemple, la clé publique est transmise de la première entité A à la deuxième entité B. De son côté, le prouveur B conserve en mémoire les fonctions f, L et E (et optionnellement T dans le cas d'une clé publique avancée) utilisées pour générer la clé publique, ces fonctions correspondant alors à la clé secrète détenue par le prouveur B.

La première entité A comporte, de son côté, un module de calcul $PROC_A$ capable de recevoir la fonction publique C ou h, ainsi qu'au moins une donnée x à chiffrer, et de calculer une donnée chiffrée de base c', ou avancée c, correspondant respectivement à l'application de la fonction de base h, ou de la fonction avancée C, à la donnée x.

Cette donnée chiffrée c ou c' peut alors être traitée par le module de calcul $PROC_B$ du prouveur B, au moyen de la clé secrète, c'est-à-dire des fonctions f, L et E (et optionnellement T dans le cas d'une clé publique avancée), selon un procédé de déchiffrement tel que décrit précédemment, pour parvenir à retrouver la donnée x. Celle-ci aura donc été transmise de façon sécurisée du vérificateur au prouveur.

La **figure 5B** illustre le procédé de transmission chiffrée selon la présente invention, employé par un système cryptographique tel que décrit en relation avec la figure 5A.

Dans une première étape de génération (501) d'une clé publique, le module de calcul $PROC_B$ du prouveur B génère une fonction publique de base h à partir d'une première fonction f, d'une deuxième fonction E et d'une fonction de codage L telle que décrite ci-avant, ou une fonction publique avancée C à partir de ces mêmes fonctions et d'une fonction de dissimulation T telle que décrite ci-avant.

La fonction publique h ou C, faisant office de clé publique, est alors transmise au cours d'une étape 503, au vérificateur A.

Le module de calcul $PROC_A$ du vérificateur A chiffre alors la donnée x à transmettre en une donnée chiffrée c' au moyen de la fonction publique de base h, respectivement en une donnée chiffrée c au moyen de la fonction publique avancée C, au cours d'une étape de chiffrement 505.

La donnée chiffrée avancée c, ou de base c', est alors transmise au prouveur B, au cours d'une étape 507.

Enfin, lors d'une étape de déchiffrement 509, la donnée chiffrée reçue par le prouveur B est déchiffrée grâce à la clé secrète conservée par le prouveur B. Dans le cas d'un chiffrement de base, la donnée chiffrée de base c' est déchiffrée au moyen de l'une au moins des fonctions f, L et E, selon l'un des modes de réalisation du déchiffrement présentés ci-avant. Dans le cas d'un chiffrement avancé, la donnée chiffrée c est déchiffrée au moyen de l'une au moins des fonctions f, L et E, ainsi que de la fonction T, selon l'un des modes de réalisation du déchiffrement présentés ci-avant.

Le procédé de transmission chiffrée, illustré par la figure 5B peut avantageusement être étendu afin de réaliser une authentification du prouveur B auprès du vérificateur A. En effet, le prouveur B qui souhaite s'authentifier doit être capable de prouver son identité au vérificateur A. En utilisant le procédé de transmission chiffrée tel que décrit en relation avec la figure 5B, le vérificateur A transmet au prouveur B la donnée chiffrée avancée c, respectivement la donnée chiffrée de base c'. La donnée chiffrée c, c' reçue est alors déchiffrée par le prouveur B au moyen de la clé secrète qu'il conserve. Dans une étape propre à l'authentification, le prouveur B envoie le donnée x ainsi déchiffrée au vérificateur A. Le vérificateur A est alors assuré de l'identité du prouveur B puisque seul le prouveur B est capable de déchiffrer la donnée x chiffrée à son attention.

## Revendications

1. Procédé pour effectuer une tâche cryptographique sur au moins une donnée numérique dans un composant électronique, ledit procédé comprenant une étape d'utilisation d'une fonction cryptographique comprenant une fonction de chiffrement de base (h) obtenue par l'addition entre :

   - une fonction intermédiaire (g) issue d'une composition d'une fonction de codage (L) consistant en un code correcteur d'erreurs avec une première fonction (f),
   - et une deuxième fonction (E),

   lesdites première (f) et deuxième (E) fonctions consistant chacune en une fonction polynomiale respectivement de degré $d_f$ et $d_E$ supérieur ou égal à deux.

2. Procédé pour effectuer une tâche cryptographique selon la revendication précédente, **caractérisé en ce que** la fonction cryptographique comprend une fonction de chiffrement améliorée (C) obtenue par la composition d'une fonction de dissimulation (T) avec ladite fonction de chiffrement de base (h).

3. Procédé pour effectuer une tâche cryptographique selon la revendication précédente, **caractérisé en ce que** le degré $d_f$ de la première fonction polynomiale (f) et le degré $d_E$ de la deuxième fonction polynomiale (E) ont la même valeur.

4. Procédé pour effectuer une tâche cryptographique selon l'une des revendications précédentes, **caractérisé en ce que** la fonction intermédiaire (g) et la deuxième fonction (E) présentent la même expansion.

5. Procédé pour effectuer une tâche cryptographique selon l'une des revendications précédentes, **caractérisé en ce que** la deuxième fonction (E) comprend une multiplication d'une pluralité de fonction linéaires.

6. Procédé pour effectuer une tâche cryptographique selon l'une des revendications précédentes, dans lequel la tâche cryptographique consiste en un chiffrement d'une donnée (x), **caractérisé en ce que** ladite étape d'utilisation est une étape de chiffrement de la donnée (x) en une donnée chiffrée (c, c') au moyen de ladite fonction de chiffrement.

7. Procédé pour effectuer une tâche cryptographique consistant en un déchiffrement d'une donnée chiffrée (c, c') selon la revendication 6, **caractérisé en ce qu'**il comprend les étapes suivantes :

   - décodage (203, 203') de la donnée chiffrée (c, c') en une donnée intermédiaire (y') par l'intermédiaire d'une fonction de décodage ($L^{-1}$) associée à la fonction de codage (L) ; et
   - application (205, 205') d'une fonction inverse de la première fonction (f) à la donnée intermédiaire (y') afin d'obtenir une donnée déchiffrée (x).

8. Procédé pour effectuer une tâche cryptographique consistant en un déchiffrement d'une donnée chiffrée (c, c') selon la revendication 6, **caractérisé en ce qu'**il comprend les étapes suivantes :

   - obtention (303) d'une donnée intermédiaire (y, e) par application d'une fonction de décodage ($L^{-1}$), associée à la fonction de codage (L), à la donnée à déchiffrer (c, c') ;
   - application (305) de la fonction inverse de la deuxième fonction (E) à la donnée intermédiaire (e) afin d'obtenir une donnée déchiffrée (x').

9. Procédé pour effectuer une tâche cryptographique consistant en un déchiffrement d'une donnée chiffrée c' selon la revendication 6, **caractérisé en ce qu'**il comprend les étapes suivantes :

- détermination (403), par application d'une fonction de décodage ($L^{-1}$), associée à la fonction de codage, à la donnée chiffrée c', d'une pluralité de paires potentielles d'éléments (y(i), e(i)) ;
- sélection (405) d'une nouvelle paire d'éléments (y(i), e(i)) parmi ladite pluralité de paires potentielles ;
- calcul (407) d'une donnée candidate (x'(i)) par application d'une fonction inverse de la deuxième fonction (E) au deuxième élément (e(i)) de la paire potentielle sélectionnée ;
- calcul (409) d'une donnée intermédiaire (y'(i)) par application de la première fonction (f) à la donnée candidate (x'(i)) ;
- comparaison (411) du premier élément de la paire sélectionnée (y(i)) avec la donnée intermédiaire (y' (i)) ;
- si le premier élément (y(i)) et la donnée intermédiaire (y'(i)) sont identiques, détermination (413) de la donnée déchiffrée (x) à partir de la donnée candidate (x') ;
- si le premier élément (y(i)) et la donnée intermédiaire (y'(i)) sont différents, retour à l'étape (405) de sélection d'une nouvelle paire d'éléments (y(i), e(i)) parmi ladite pluralité de paires potentielles.

10. Procédé pour effectuer un déchiffrement d'une donnée chiffrée selon l'une des revendications 7 à 9, **caractérisé en ce qu'**il comporte une étape préliminaire (201, 301, 401) d'application d'une fonction inverse de la fonction de dissimulation (T) à une donnée chiffrée améliorée (c) afin d'obtenir la donnée chiffrée de base (c') à déchiffrer.

11. Procédé pour effectuer une tâche cryptographique selon l'une des revendications 8 à 10, dans lequel la tâche consiste en une authentification, par une première entité (A), d'un message chiffré émis par une deuxième entité (B).

12. Procédé de génération d'une clé publique de cryptographie asymétrique, comprenant les étapes suivantes :

- composition d'une première fonction (f) avec une fonction de codage (L) consistant en un code correcteur d'erreurs afin d'obtenir une fonction intermédiaire (g) ; et
- addition d'une deuxième fonction (E) à ladite fonction intermédiaire (g) afin d'obtenir une fonction de chiffrement publique de base (h) utilisable comme clé publique,

lesdites première (f) et deuxième (E) fonctions consistant chacune en une fonction polynomiale respectivement de degré $d_f$ et $d_E$ supérieur ou égal à deux.

13. Procédé de fabrication d'une clé publique avancée de cryptographie asymétrique, **caractérisé en ce que** le procédé comporte une étape de composition d'une fonction de dissimulation (T) avec une fonction générée par le procédé de génération selon la revendication précédente.

14. Dispositif cryptographique comprenant un module de calcul ($PROC_A$, $PROC_B$), **caractérisé en ce que** ledit module de calcul est apte à implémenter un procédé selon l'une des revendications 1 à 12.


**Patentansprüche**

1. Verfahren zur Durchführung einer kryptographischen Aufgabe an wenigstens einer digitalen Dateneinheit in einer elektronischen Komponente, wobei das Verfahren einen Schritt des Verwendens einer kryptographischen Funktion umfasst, die eine Basis-Chiffrierfunktion (h) umfasst, die erhalten wird durch die Addition zwischen:

- einer Zwischenfunktion (g), die aus einer Komposition einer in einem Fehlerkorrekturcode bestehenden Codierfunktion (L) mit einer ersten Funktion (f) stammt,
- und einer zweiten Funktion (E),

wobei die erste (f) und zweite (E) Funktion jede in einer Polynomfunktion jeweils des Grades $d_f$ und $d_E$ größer oder gleich zwei bestehen.

2. Verfahren zur Durchführung einer kryptographischen Aufgabe nach dem vorhergehenden Anspruch, **dadurch gekennzeichnet, dass** die kryptographische Funktion eine verbesserte Chiffrierfunktion (C) umfasst, die durch die Komposition einer Verdeckungsfunktion (T) mit der Basis-Chiffrierfunktion (h) erhalten wird.

3. Verfahren zur Durchführung einer kryptographischen Aufgabe nach dem vorhergehenden Anspruch, **dadurch ge-**

**kennzeichnet, dass** der Grad $d_f$ der ersten Polynomfunktion (f) und der Grad $d_E$ der zweiten Polynomfunktion (E) den gleichen Wert besitzen.

4. Verfahren zur Durchführung einer kryptographischen Aufgabe nach einem der vorhergehenden Ansprüche, **dadurch gekennzeichnet, dass** die Zwischenfunktion (g) und die zweite Funktion (E) die gleiche Erweiterung aufweisen.

5. Verfahren zur Durchführung einer kryptographischen Aufgabe nach einem der vorhergehenden Ansprüche, **dadurch gekennzeichnet, dass** die zweite Funktion (E) eine Multiplikation einer Vielzahl von linearen Funktionen umfasst.

6. Verfahren zur Durchführung einer kryptographischen Aufgabe nach einem der vorhergehenden Ansprüche, wobei die kryptographische Aufgabe in einem Chiffrieren einer Dateneinheit (x) besteht, **dadurch gekennzeichnet, dass** der Schritt des Verwendens ein Schritt des Chiffrierens der Dateneinheit (x) mit Hilfe der Chiffrierfunktion in eine chiffrierte Dateneinheit (c, c') ist.

7. Verfahren zur Durchführung einer kryptographischen Aufgabe, die in einem Dechiffrieren einer nach Anspruch 6 chiffrierten Dateneinheit (c, c') besteht, **dadurch gekennzeichnet, dass** es die folgenden Schritte umfasst:

   - Decodieren (203, 203') der chiffrierten Dateneinheit (c, c') in eine Zwischendateneinheit (y') mittels einer Decodierfunktion ($L^{-1}$), die mit der Codierfunktion (L) assoziiert ist; und
   - Anwenden (205, 205') einer Umkehrfunktion der ersten Funktion (f) auf die Zwischendateneinheit (y'), um eine dechiffrierte Dateneinheit (x) zu erhalten.

8. Verfahren zur Durchführung einer kryptographischen Aufgabe, die in einem Dechiffrieren einer nach Anspruch 6 chiffrierten Dateneinheit (c, c') besteht, **dadurch gekennzeichnet, dass** es die folgenden Schritte umfasst:

   - Erhalten (303) einer Zwischendateneinheit (y, e) durch Anwenden einer Decodierfunktion ($L^{-1}$), die mit der Codierfunktion (L) assoziiert ist, auf die zu dechiffrierende Dateneinheit (c, c');
   - Anwenden (305) der Umkehrfunktion der zweiten Funktion (E) auf die Zwischendateneinheit (e), um eine dechiffrierte Dateneinheit (x') zu erhalten.

9. Verfahren zur Durchführung einer kryptographischen Aufgabe, die in einem Dechiffrieren einer nach Anspruch 6 chiffrierten Dateneinheit c' besteht, **dadurch gekennzeichnet, dass** es die folgenden Schritte umfasst:

   - Bestimmen (403), durch Anwenden einer mit der Codierfunktion assoziierten Decodierfunktion ($L^{-1}$) auf die chiffrierte Dateneinheit c', einer Vielzahl von potentiellen Elementepaare (y(i), e(i));
   - Auswählen (405) eines neuen Elementepaares (y(i), e(i)) aus der Vielzahl von potentiellen Paaren;
   - Berechnen (407) einer Kandidaten-Dateneinheit (x'(i)) durch Anwenden einer Umkehrfunktion der zweiten Funktion (E) auf das zweite Element (e(i)) des ausgewählten potentiellen Paares;
   - Berechnen (409) einer Zwischendateneinheit (y'(i)) durch Anwenden der ersten Funktion (f) auf die Kandidaten-Dateneinheit (x'(i));
   - Vergleichen (411) des ersten Elements des ausgewählten Paares (y(i)) mit der Zwischendateneinheit (y'(i));
   - wenn das erste Element (y(i)) und die Zwischendateneinheit (y'(i)) identisch sind, Bestimmen (413) der dechiffrierten Dateneinheit (x) ausgehend von der Kandidaten-Dateneinheit (x');
   - wenn das erste Element (y(i)) und die Zwischendateneinheit (y'(i)) verschieden sind, Zurückkehren zum Schritt (405) des Auswählens eines neuen Elementepaares (y(i), e(i)) aus der Vielzahl von potentiellen Paaren.

10. Verfahren zur Durchführung eines Dechiffrierens einer chiffrierten Dateneinheit nach einem der Ansprüche 7 bis 9, **dadurch gekennzeichnet, dass** es einen einleitenden Schritt (201, 301, 401) des Anwendens einer Umkehrfunktion der Verdeckungsfunktion (T) auf eine verbesserte chiffrierte Dateneinheit (c) umfasst, um die zu dechiffrierende chiffrierte Basis-Dateneinheit (c') zu erhalten.

11. Verfahren zur Durchführung einer kryptographischen Aufgabe nach einem der Ansprüche 8 bis 10, wobei die Aufgabe in einer Authentifizierung, durch eine erste Entität (A), einer durch eine zweite Entität (B) ausgegebenen chiffrierten Nachricht besteht.

12. Verfahren zur Erzeugung eines öffentlichen Schlüssels asymmetrischer Kryptographie, umfassend die folgenden Schritte:

- Komposition einer ersten Funktion (f) mit einer Codierfunktion (L), die in einem Fehlerkorrekturcode besteht, um eine Zwischenfunktion (g) zu erhalten; und
- Addieren einer zweiten Funktion (E) zu der Zwischenfunktion (g), um eine öffentliche Basis-Chiffrierfunktion (h) zu erhalten, die als öffentlicher Schlüssel verwendbar ist,

wobei die erste (f) und zweite (E) Funktion jede in einer Polynomfunktion jeweils des Grades $d_f$ und $d_E$ größer oder gleich zwei bestehen.

13. Verfahren zur Herstellung eines erweiterten öffentlichen Schlüssels asymmetrischer Kryptographie, **dadurch gekennzeichnet, dass** das Verfahren einen Schritt der Komposition einer Verdeckungsfunktion (T) mit einer durch das Erzeugungsverfahren nach dem vorhergehenden Anspruch erzeugten Funktion umfasst.

14. Kryptographische Vorrichtung, umfassend ein Berechnungsmodul ($PROC_A$, $PROC_B$), **dadurch gekennzeichnet, dass** das Berechnungsmodul geeignet ist, ein Verfahren nach einem der Ansprüche 1 bis 12 zu implementieren.

### Claims

1. Method for performing a cryptographic task on at least one digital data item in an electronic component, said method comprising a step of using a cryptographic function comprising a basic encryption function (h) obtained by addition between:

   - an intermediate function (g) issuing from a composition of a coding function (L) consisting of an error correcting code with a first function (f),
   - and a second function (E),

   said first (f) and second (E) functions each consisting of a polynomial function respectively of degree $d_f$ and $d_E$ greater than or equal to 2.

2. Method for performing a cryptographic task according to the preceding claim, **characterised in that** the cryptographic function comprises an improved encryption function (C) obtained by the composition of a concealment function (T) with said basic encryption function (h).

3. Method for performing a cryptographic task according to the preceding claim, **characterised in that** the degree $d_f$ of the first polynomial function (f) and the degree $d_E$ of the second polynomial function (E) have the same value.

4. Method for performing a cryptographic task according to any of the preceding claims, **characterised in that** the intermediate function (g) and the second function (E) have the same expansion.

5. Method for performing a cryptographic task according to any of the preceding claims, **characterised in that** the second function (E) comprises a multiplication of a plurality of linear functions.

6. Method for performing a cryptographic task according to any of the preceding claims, in which the cryptographic task consists of an encryption of a data item (x), **characterised in that** said use step is a step of encryption of the data item (x) into an encrypted data item (c, c') by means of said encryption function.

7. Method for performing a cryptographic task consisting of a deciphering of an encrypted data item (c, c') according to claim 6, **characterised in that** it comprises the following steps:

   - decoding (203, 203') of the encrypted data item (c, c') into an intermediate data item (y') by means of a decoding function ($L^{-1}$) associated with the coding function (L); and
   - application (205, 205') of a function that is the inverse of the first function (f) to the intermediate data item (y') in order to obtain a deciphered data item (x).

8. Method for performing a cryptographic task consisting of a deciphering of an encrypted data item (c, c') according to claim 6, **characterised in that** it comprises the following steps:

   - obtaining (303) an intermediate data item (y, e) by applying a decoding function ($L^{-1}$), associated with the

coding function (L), to the data item to be deciphered (c, c') ;
- applying (305) the function that is the inverse of the second function (E) to the intermediate data item (e) in order to obtain a deciphered data item (x').

9. Method for performing a cryptographic task consisting of a deciphering of an encrypted data item c' according to claim 6, **characterised in that** it comprises the following steps:

- determination (403), by applying a decoding function ($L^{-1}$), associated with the coding function, to the encrypted data item c', of a plurality of potential pairs of elements (y(i), e(i)),
- selection (405) of a new pair of elements (y(i), e(i)) from said plurality of potential pairs;
- calculation (407) of a candidate data item (x'(i)) by applying a function that is in the inverse of the second function (E) to the second element (e(i)) of the potential pair selected;
- calculation (409) of an intermediate data item (y'(i)) by applying the first function (f) to the candidate data item (x' (i));
- comparison (411) of the first element of the selected pair (y(i)) with the intermediate data item (y'(i));
- if the first element (y(i)) and the intermediate data item (y'(i)) are identical, determination (413) of the deciphered data item (x) from the candidate data item (x');
- if the first element (y(i)) and the intermediate data item (y'(i)) are different, return to the step (405) of selection of a new pair of elements (y(i), e(i)) from said plurality of potential pairs.

10. Method for performing a deciphering of an encrypted data item according to any of claims 7 to 9, **characterised in that** it comprises a preliminary step (201, 301, 401) of applying a function that is the inverse of the concealment function (T) to an improved encrypted data item (c) in order to obtain the basic encrypted data item (c') to be deciphered.

11. Method for performing a cryptographic task according to any of claims 8 to 10, in which the task consists of an authentication, by a first entity (A), of an encrypted message sent by a second entity (B).

12. Method for generating an asymmetric public cryptography key, comprising the following steps:

- composition of a first function (f) with a coding function (L) consisting of an error correcting code in order to obtain an intermediate function (g); and
- addition of a second function (E) to said intermediate function (g) in order to obtain a basic public encryption function (h) that can be used as a public key,

said first (f) and second (E) functions each consisting of a polynomial function respectively of degree $d_f$ and $d_E$ greater than or equal to two.

13. Method for manufacturing an advanced asymmetric cryptography public key, **characterised in that** the method comprises a step of composition of a concealment function (T) with a function generated by the generation method according to the preceding claim.

14. Cryptographic device comprising a computing module ($PROC_A$, $PROC_B$), **characterised in that** said computing module is able to implement a method according to any of claims 1 to 12.

# FIG.1.

FIG.2A.

# FIG.2B.

$$x = (x_1, \ldots, x_n)$$

$205'$    $f^{-1}$

$$y = (y_1, \ldots, y_m)$$

$203'$    $L^{-1}$

$$c' = (c'_1, \ldots, c'_{N'})$$

$T^{-1}$    $-201'$

$$c = (c_1, \ldots, c_N)$$

# FIG.3A.

# FIG.3B.

# FIG.3C.

# FIG.4A.

```
        ( C )
          │
          ▼
   ┌ ─ ─ ─ ─ ─ ┐
   │    T⁻¹    │ ─ ─ ─ 401
   └ ─ ─ ─ ─ ─ ┘
          │ c'
          ▼
   ┌───────────┐
   │    L⁻¹    │────403
   └───────────┘
          │ {(y(i),e(i))}
          ▼
   ┌──────────────────────┐
 ┌─│  SELEC  (y(i),e(i))  │────405
 │ └──────────────────────┘
 │        │           │
 │        │           │ e(i)
 │        │           ▼
 │        │        ┌──────────────┐
 │        │        │ x'(i)=E⁻¹(e(i)) │──407
 │        │        └──────────────┘
 │        │ y(i)        │ x'(i)
 │        │           ▼
 │        │        ┌──────────────┐
 │        │        │ y'(i)=f(x'(i)) │
 │        │        └──────────────┘
 │        │           │ y'(i)    409
 │        ▼           ▼
 │  N ◇ y'(i)=y(i) ? ◇
 └────                411
          │ 0
          ▼
        ( x=x' )────413
```

# FIG.4B.

# FIG.5A.

# FIG.5B.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- SEMANTICALLY SECURE MCELIECE PUBLIC-KEY CRYPTOSYSTEM. **KOBARA K et al.** IEICE TRANSACTIONS ON FUNDAMENTALS OF ELECTRONICS,COMMUNICATIONS AND COMPUTER SCIENCES. ENGINEERING SCIENCES SOCIETY, 01 Janvier 2002, vol. E85-A, 74-83